# FASCICULE DE BREVET EUROPEEN

(11) **EP 3 551 480 B1**
(45) Date de publication et mention de la délivrance du brevet: **22.06.2022**
(21) Numéro de dépôt: 17816956.1
(22) Date de dépôt: 30.11.2017
(51) Int. Cl.: B60C 23/04, G06K 19/077, B29D 30/00

(54) **PNEUMATIQUE ADAPTÉ POUR ROULAGE À PLAT EQUIPÉ D'UN ORGANE ELECTRONIQUE**
ZUM FAHREN BEI EINER REIFENPANNE GEEIGNETER REIFEN MIT EINEM ELEKTRONISCHEN ELEMENT
TYRE SUITABLE FOR RUNNING FLAT EQUIPPED WITH AN ELECTRONIC MEMBER

(30) Priorité: 07.12.2016 FR 1662070
(43) Date de publication de la demande: 16.10.2019
(73) Titulaire: Compagnie Générale des Etablissements Michelin, 63000 Clermont-Ferrand (FR)
(72) Inventeur: LALLEMENT, Philippe, 63040 Clermont-Ferrand Cedex 9 (FR); MUHLHOFF, Olivier, 63040 Clermont-Ferrand Cedex 9 (FR)
(74) Mandataire: Roussy, Delphine
(86) Numéro de dépôt international: PCT/FR2017/053324
(87) Numéro de publication internationale: WO 2018/104623

(56) Documents cités:
- EP-A1- 1 619 052
- EP-A1- 1 977 912
- DE-A1-102007 043 077
- FR-A1- 2 936 185
- JP-A- 2011 195 046
- JP-A- 2016 049 920
- US-A1- 2010 122 757

## Description

### Domaine de l'invention

La présente invention concerne un pneumatique adapté pour le roulage à plat et équipé d'un organe électronique.

### État de la technique

Depuis quelques années, les manufacturiers de pneumatiques cherchent à supprimer la nécessité de la présence d'une roue de secours à bord du véhicule tout en garantissant la possibilité au véhicule de poursuivre sa route malgré une perte importante ou totale de pression d'un ou plusieurs pneumatiques. Cela permet par exemple de se rendre à un point de dépannage sans devoir s'arrêter, dans des circonstances souvent hasardeuses, pour installer la roue de secours.

Une solution envisagée est l'utilisation de pneumatiques adaptés pour un roulage à plat et pourvus de flancs autoporteurs, (parfois désignés par les appellations commerciales en langue anglaise « ZP » pour « zero pressure » ou « SST » pour « self supporting tire »).

On connait de l'état de la technique un pneumatique adapté pour un roulage à plat comportant un sommet comprenant une armature de sommet, formée de deux nappes de sommet d'éléments de renfort et surmontée d'une bande de roulement. Deux flancs prolongent le sommet radialement vers l'intérieur. Ces flancs sont renforcés au moyen d'inserts en caoutchouc permettant de supporter une charge à pression réduite, voire sans pression.

Le pneumatique comporte en outre deux bourrelets comprenant chacun une tringle ainsi qu'une armature de carcasse s'étendant depuis les bourrelets à travers les flancs vers le sommet et comportant au moins une nappe de carcasse d'éléments de renfort. La nappe de carcasse est ancrée à chacun des bourrelets par un retournement autour de la tringle.

Lorsque la pression de gonflage est significativement abaissée par rapport à la pression de service, voire même nulle (on parle alors de mode « roulage à plat »), le pneumatique doit permettre de rouler une distance donnée à une vitesse donnée. Cette performance, dite performance « RME » (Roulage Mode Étendu), est requise par la législation ou par les constructeurs automobiles pour permettre au manufacturier de présenter le pneumatique comme adapté pour le roulage à plat.

Lorsque la pression de gonflage est proche de la pression de service (on parle alors de mode « roulage normal »), il est souhaitable que le pneumatique présente des performances, dites performances « RMG » (Roulage Mode Gonflé), aussi élevées que possible. Ces performances RMG comprennent, entre autres, la masse, la résistance au roulement ou encore le confort.

Un pneumatique adapté pour un roulage à plat avec un capteur de pression fixé à la surface interne du pneumatique est connu de EP1619052 A1.

D'autre part, il est avantageux de munir les pneumatiques d'organes électroniques d'identification comme des transpondeurs radiofréquences ou tag RFID (acronyme en anglais Radio Frequency IDentification) qui permettent leur identification et leur suivi pendant leur fabrication, leur stockage, l'ensemble de leur vie et aussi lors de leur rechapage.

EP1977912 A1 décrit un transpondeur radiofréquence placé axialement dans une zone du pneumatique délimitée par le bourrelet et le flanc.

Le document DE102007043077 A1 décit un module capteur avec une antenne primaire qui est couplée inductivement avec une antenne rayonnante hélice.

Les pneumatiques concernés sont les pneumatiques de tous types pour véhicules poids lourds, de tourisme, génie civil, agricole, avion.

De tels organes électriques peuvent être des transpondeurs radiofréquence ou tag RFID.

La mise en place de ces organes électroniques doit être très précise pour garantir une bonne communication radiofréquence, une durée de vie acceptable des dispositifs ainsi que pour ne pas pénaliser le fonctionnement ou l'endurance des pneumatiques.

Les conditions particulières d'utilisation des pneumatiques aptes à rouler à plat lors d'un tel roulage à plat rendent particulièrement difficile l'introduction de tels organes électroniques dans ces types de pneumatiques.

### Description brève de l'invention

L'invention a pour objet un pneumatique adapté pour un roulage à plat, le pneumatique comportant un sommet, deux flancs et deux bourrelets, une armature de carcasse avec au moins une nappe de carcasse ancrée dans chaque bourrelet et un insert de flanc disposé axialement intérieurement relativement à au moins la nappe de carcasse. Ce pneumatique est caractérisé en ce qu'il est équipé d'un organe électronique constitué du transpondeur radiofréquence comprenant une puce électronique et une antenne rayonnante apte à communiquer avec un lecteur radiofréquence, en ce que le transpondeur radiofréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin définissant un premier axe longitudinal et en ce que, chaque bourrelet comportant une tringle de révolution autour d'un axe de référence et H étant un des points de ladite tringle les plus proches dudit axe de révolution, ledit organe électronique est placé axialement dans une zone du pneumatique délimitée par au moins l'un des bourrelets et l'un des flancs et radialement extérieurement à une distance radiale supérieure à 20 mm dudit point H.

Cette position permet de garantir la qualité de la communication électromagnétique vers un récepteur externe au pneumatique. La roue sur laquelle le pneumatique est monté est en général métallique et une position trop proche de celle-ci peut perturber la communication. Il est à noter que la hauteur des crochets de jante usuels est de 17,5 mm et au-delà d'une distance radiale de 20 mm du point H, la perturbation électromagnétique du crochet de jante devient minime.

D'autre part, il est préférable de ne pas placer l'organe électronique dans la zone médiane du flanc du pneumatique car c'est cette zone du flanc qui est la plus sollicitée mécaniquement en roulage et la plus susceptible de subir des râpages trottoir.

En particulier une fréquence de communication de l'organe électronique est située dans la bande des UHF (acronyme de Ultra Hautes Fréquences) comprise entre 300MHz et 3GHz permettant d'avoir un compromis avantageux entre une petite taille de l'antenne rayonnante, facilement intégrable à une enveloppe pneumatique, et une grande distance de lecture de l'organe électronique, loin de l'enveloppe pneumatique. De façon avantageuse, l'organe électronique communique dans la bande étroite de fréquences comprise entre 860 MHz et 960 Mhz et tout spécifiquement sur des bandes très étroites de 860 MHz à 870 MHz et 915 MHz à 925 MHz. En effet, à ces fréquences, les mélanges élastomères classiques de l'enveloppe pneumatique constituent un bon compromis à la propagation des ondes radioélectriques. De plus, ces fréquences sont les plus élevées possibles pour minimiser la taille de l'antenne rayonnante afin de faciliter l'intégration de l'organe électronique dans l'enveloppe pneumatique.

Selon un autre mode de réalisation préférentiel, chaque bourrelet comportant une tringle de révolution autour d'un axe de référence, l'armature de carcasse comprenant une nappe de carcasse avec un retournement autour de chacune des tringles et le retournement ayant une extrémité axialement extérieure, l'organe électronique est disposé radialement extérieurement à une distance radiale supérieure à 5 mm et de préférence 10 mm de ladite extrémité axialement extérieure de l'un des retournements.

Cela permet d'éloigner l'organe électronique de la singularité mécanique liée à la différence de rigidité entre l'extrémité axialement extérieure des renforts de la nappe de carcasse et les mélanges caoutchouteux adjacents.

Selon un autre mode de réalisation préférentiel, chaque bourrelet comportant une tringle de révolution autour d'un axe de référence et une gomme de bourrage s'étendant radialement extérieurement relativement à la tringle, l'armature de carcasse comprenant une nappe de carcasse avec un retournement autour de chacune des tringles et la gomme de bourrage s'étendant radialement au-delà de l'extrémité axialement extérieure du retournement, l'organe électronique est disposé axialement extérieurement relativement à l'armature de carcasse et radialement à une distance supérieure à 5 mm et de préférence 10 mm de l'extrémité radialement extérieure de la gomme de bourrage.

Cela permet d'éloigner l'organe électronique de la singularité mécanique liée à la différence de rigidité entre l'extrémité de la gomme de bourrage et les mélanges adjacents.

Selon un autre mode de réalisation préférentiel, chaque bourrelet comportant une tringle de révolution autour d'un axe de référence, une première et une deuxième gommes de bourrage s'étendant radialement extérieurement relativement à la tringle, la deuxième gomme de bourrage étant disposée axialement extérieurement relativement à la première, l'armature de carcasse comprenant une nappe de carcasse avec un retournement autour de chacune des tringles et s'étendant radialement entre lesdites première et deuxième gomme de bourrage, l'organe électronique est disposé axialement extérieurement relativement à la deuxième gomme de bourrage.

Préférentiellement, le flanc comportant une gomme flanc disposée au moins en partie axialement extérieurement relativement à la deuxième gomme de bourrage, l'organe électronique est disposé à l'interface entre la gomme flanc et la deuxième gomme de bourrage.

Compte tenu de la faible rigidité de la gomme flanc, cette position permet de pleinement profiter de la meilleure résistance mécanique de l'organe électronique aux déformations subies par cette gomme flanc en roulage et particulièrement en roulage à plat.

Selon un autre mode de réalisation préférentiel, le bourrelet comportant une gomme protecteur apte à venir en contact avec la surface d'une jante disposée radialement intérieurement relativement à la tringle et s'étendant de part et d'autre de celle-ci jusqu'à deux extrémités radialement extérieures, l'extrémité axialement extérieure de la gomme protecteur s'étendant radialement au-delà de l'extrémité radialement intérieure de la deuxième gomme de bourrage, l'organe électronique est disposé entre la gomme protecteur et la gomme de bourrage.

Selon un autre mode de réalisation préférentiel, le flanc comportant une gomme flanc et le bourrelet comportant une gomme protecteur apte à venir en contact avec la surface d'une jante disposée radialement intérieurement relativement à la tringle et s'étendant de part et d'autre de celle-ci jusqu'à deux extrémités radialement extérieures, l'extrémité axialement extérieure de ladite gomme protecteur disposée axialement intérieurement relativement à la gomme flanc et s'étendant radialement au-delà de l'extrémité radialement intérieure de la gomme flanc, l'organe électronique est disposé entre la gomme flanc et la gomme protecteur.

Selon un autre mode de réalisation préférentiel, l'organe électronique est disposé à l'interface entre l'insert de flanc et un mélange caoutchouteux adjacent.

L'organe électronique peut ainsi être disposé axialement intérieurement relativement à l'insert de flanc, à l'interface entre l'insert et la gomme intérieure.

Il peut aussi être disposé axialement extérieurement relativement à l'insert de flanc, à l'interface entre l'insert et une nappe de carcasse de l'armature de carcasse.

Avantageusement, l'insert de flanc a une épaisseur maximale comprise entre 6 et 16 mm.

L'organe électronique est constitué d'un transpondeur radiofréquence. Il peut aussi être constitué d'un transpondeur radiofréquence encapsulé dans une masse de gomme d'enrobage isolante électriquement.

Ainsi, l'interrogation de l'organe électronique se fait extérieurement à l'organe électronique de façon passive. Les phases d'interrogation de l'organe électronique ne nécessitent alors aucune énergie propre à l'organe électronique. La fonctionnalité du transpondeur radiofréquence est principalement un rôle d'identification de l'enveloppe pneumatique.

Il est nécessaire pour un bon fonctionnement radiofréquence de l'antenne rayonnante de l'organe électronique, que cette antenne soit noyée dans une masse de gomme d'enrobage isolante électriquement. On peut ainsi utiliser un semi-fini constitué d'un transpondeur radiofréquence noyé dans une masse de gomme isolante électriquement pour le placer dans la structure du pneumatique lors de sa fabrication à la place choisie.

Mais il est aussi possible de placer directement le transpondeur radiofréquence entre deux mélanges du pneumatique lorsque ceux-ci, en raison de leur formulation, sont isolants électriquement.

De préférence, le module en extension de la masse de gomme d'enrobage est inférieur ou égal au module en extension des mélanges caoutchouteux adjacents.

Selon un autre aspect, la constante diélectrique relative de la masse de gomme d'enrobage est inférieure à la constante diélectrique relative des mélanges caoutchouteux adjacents.

Selon l'invention, le transpondeur radiofréquence comprend une puce électronique et une antenne rayonnante apte à communiquer avec un lecteur radiofréquence externe.

Selon un premier mode de réalisation, l'antenne rayonnante comportant deux tronçons d'antennes hélicoïdales, la puce électronique est connectée galvaniquement aux deux tronçons d'antennes hélicoïdales.

Selon l'invention, le transpondeur radio fréquence comprend en plus une antenne primaire connectée électriquement à la puce électronique, dans lequel l'antenne primaire est couplée inductivement à l'antenne rayonnante, et dans lequel l'antenne rayonnante est une antenne dipôle constituée d'un ressort hélicoïdal monobrin.

Ce deuxième mode de réalisation a l'avantage de dissocier mécaniquement l'antenne rayonnante des composants électroniques du transpondeur et ainsi de supprimer le point faible des transpondeurs usuels à savoir la zone de fixation des tronçons d'antenne sur le support de la puce électronique. L'intégration d'un tel organe électronique dans un pneumatique permet de réduire les risques de détérioration de l'organe de par sa structure tout en améliorant la performance de radiocommunication et en minimisant les risques liés à l'intégrité physique du pneumatique.

En effet, la détérioration de l'organe électronique provient généralement de défaillances au niveau des connexions électriques existant entre l'antenne rayonnante de communication et la partie électronique de l'organe. Ici aucune connexion mécanique n'est réalisée puisque le transfert d'énergie entre l'antenne de communication et la puce électronique est fait par champ électromagnétique via une antenne primaire. Or, si la dimension de l'antenne rayonnante, liée à la bande de fréquence de communication et à son fonctionnement en champ lointain, est par nature de grande dimension, l'antenne primaire n'est pas soumise à cette contrainte. De ce fait, elle est de plus petite taille en général permettant de supporter aisément les déformations du pneumatique sans générer de trop fortes contraintes mécaniques au sein de sa jonction galvanique avec la puce électronique. Enfin la nature souple de l'antenne rayonnante limite les risques de détérioration de la zone du pneumatique proche du transpondeur.

En second lieu, l'introduction de l'antenne primaire permet de dissocier des fonctions antagonistes entre dimension de l'antenne rayonnante et impédance électrique de la partie électronique de l'organe. Ainsi, il est possible de dimensionner l'antenne primaire afin d'adapter son impédance électrique à la puce pour minimiser les pertes et améliorer de ce fait la performance énergétique de l'organe électronique. Le dimensionnement de l'antenne rayonnante suit alors le seul critère de la fréquence de communication de l'organe électronique. L'ensemble tend à améliorer la performance de radiocommunication de l'organe électronique.

Selon un mode de réalisation préférentiel, l'antenne rayonnante définissant un premier axe longitudinal, l'antenne primaire est une bobine ayant au moins une spire définissant un deuxième axe longitudinal qui est circonscrite dans un cylindre dont l'axe de révolution est parallèle au deuxième axe longitudinal et dont le diamètre est compris entre le tiers et trois fois, de préférence entre la moitié et deux fois, le diamètre moyen du ressort hélicoïdal de l'antenne rayonnante.

Ainsi, l'antenne primaire étant une antenne boucle, le transfert d'énergie entre l'antenne rayonnante et l'antenne primaire est principalement réalisé par couplage inductif. Cela impose alors une certaine proximité (pour limiter l'entrefer entre les deux antennes) entre les deux antennes nécessitant un dimensionnement de la bobine de l'antenne primaire par rapport à l'antenne rayonnante pour assurer une efficacité de transfert d'énergie suffisante pour avoir la qualité de radiocommunication souhaitée. Concrètement, l'antenne primaire peut avantageusement être de diamètre inférieur à celui de l'antenne rayonnante, dans ce cas l'ensemble de la partie électronique du transpondeur est insérée dans l'antenne rayonnante et l'ensemble est particulièrement robuste dans un environnement tel que celui d'un pneumatique.

L'antenne peut aussi être de diamètre supérieur à celui de l'antenne rayonnante, ce cas est particulièrement avantageux lorsque l'on souhaite ajouter au transpondeur radiofréquence d'autres composants électroniques, actifs ou passifs, pour réaliser des fonctions complémentaires, par exemple de surveillance de l'état du pneumatique.

Selon un mode de réalisation avantageux, l'antenne rayonnante ayant une zone centrale entre deux zones latérales et l'antenne primaire ayant un plan médian perpendiculaire au deuxième axe longitudinal, les premier et deuxième axes longitudinaux sont parallèles entre eux et le plan médian de l'antenne primaire est disposé dans la zone centrale de l'antenne rayonnante.

On entend ici par le terme « zone centrale », le cylindre défini par le diamètre intérieur du ressort hélicoïdal situé de part et d'autre du plan médian du ressort hélicoïdal et dont la hauteur correspond à 25 % de la longueur du ressort hélicoïdal, de préférence 15 % de la longueur du ressort hélicoïdal.

Ainsi on assure à la fois que la distance entre les antennes rayonnante et primaire est constante le long des axes longitudinaux de ces antennes optimisant ainsi au niveau de chaque élément de longueur de l'antenne primaire un transfert d'énergie équivalent. De plus, le champ magnétique créé par une bobine parcourue par un courant électrique étant maximal au centre de la longueur de la bobine (dans le cas d'une antenne λ/2), il est préférable de placer le plan médian de l'antenne primaire dans la zone centrale de l'antenne rayonnante et plus préférentiellement au centre de celle-ci pour maximiser le champ magnétique à l'origine du couplage inductif.

Préférentiellement, dans le cas de pneumatique aptes au roulage à plat, l'antenne primaire est disposée à l'intérieur du ressort hélicoïdal monobrin de l'antenne rayonnante.

### Description des Figures

Les différents objets de l'invention seront mieux compris au moyen de la description détaillée qui suit, conjointement avec les figures annexés sur lesquelles les mêmes numéros de référence désignent partout des parties identiques, et dans lesquelles :
- la figure 1 illustre en coupe axiale partielle un pneumatique apte à un roulage à plat ;
- les figures 2 à 7 et 13 illustrent en coupe axiale différents modes de réalisation de la zone du pneumatique délimitée par le bourrelet et le flanc comportant un organe électronique placé dans leurs structures ;
- la figure 8 présente une vue éclatée schématique d'un organe électronique ;
- la figure 9 présente une vue en perspective d'un transpondeur radiofréquence selon un mode de réalisation de l'invention dans une configuration où la partie électronique est située à l'intérieur de l'antenne rayonnante ;
- la figure 10 présente une vue en perspective d'un transpondeur radiofréquence selon l'invention dans une configuration où la partie électronique est située à l'extérieur de l'antenne rayonnante ;
- la figure 11 présente une vue de détail d'une antenne rayonnante d'un transpondeur radiofréquence selon un mode de réalisation de l'invention ; et
- la figure 12 présente une vue en perspective de la partie électronique d'un transpondeur radiofréquence dans une configuration où la partie électronique est située à l'intérieur de l'antenne rayonnante.

### Description détaillée de l'invention

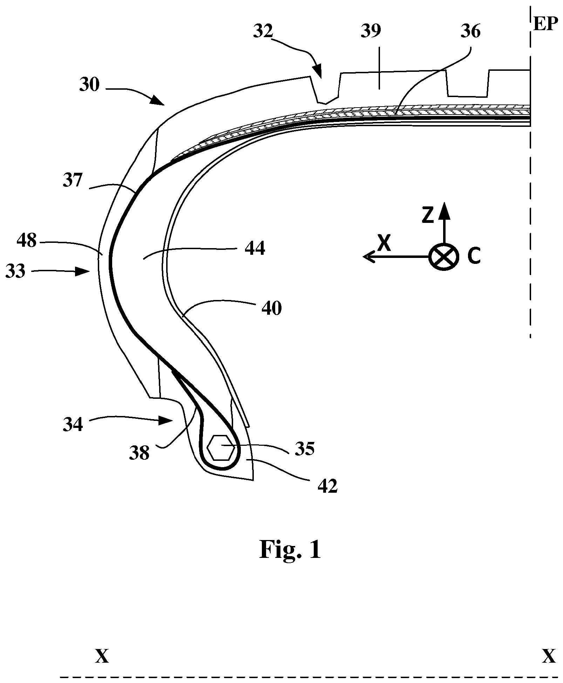

La figure 1 indique les directions axiale X, circonférentielle C et radiale Z ainsi que le plan médian EP (plan perpendiculaire à l'axe de rotation du pneumatique qui est situé à mi-distance des deux bourrelets du pneumatique et passe par le milieu de l'armature de sommet) et l'axe de rotation XX du pneumatique 30.

Dans toutes les figures, le pneumatique est représenté libre, non monté sur une jante et tel que la largeur entre les deux bourrelets est ramenée à la largeur de la jante nominale ETRTO.

En ce qui concerne la direction axiale, on entend par « axialement extérieur » une direction axiale dirigée vers l'extérieur du pneumatique et par « axialement intérieur » une direction axiale dirigée vers le plan médian EP du pneumatique.

Ce pneumatique 30 apte au roulage à plat comporte un sommet 32 renforcé par une armature de sommet ou ceinture 36, un flanc 33 et un bourrelet 34, le bourrelet 34 étant renforcé avec une tringle 35. L'armature de sommet 36 est surmontée radialement extérieurement d'une bande de roulement caoutchouteuse 39. Une armature de carcasse 37 est enroulée autour de la tringle 35 dans le bourrelet 34, le retournement 38 de cette armature 37 étant par exemple disposé vers l'extérieur du pneumatique 30. L'armature de carcasse 37 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian EP. Une couche de gomme intérieure étanche 40 (en anglais « inner liner ») s'étend d'un bourrelet à l'autre radialement intérieurement relativement à l'armature de carcasse 37. Le bourrelet 34 comporte une gomme protecteur 42 apte à être en contact avec la surface d'une jante. Il comporte aussi une première gomme de bourrage 46 s'étendant radialement extérieurement relativement à la tringle 35.

Le pneumatique 30 est apte à rouler à plat en raison de la présence d'un insert de flanc 44 disposé axialement intérieurement relativement à l'armature de carcasse 33. Cet insert 44 permet à la structure du pneumatique de supporter la charge à pression nulle.

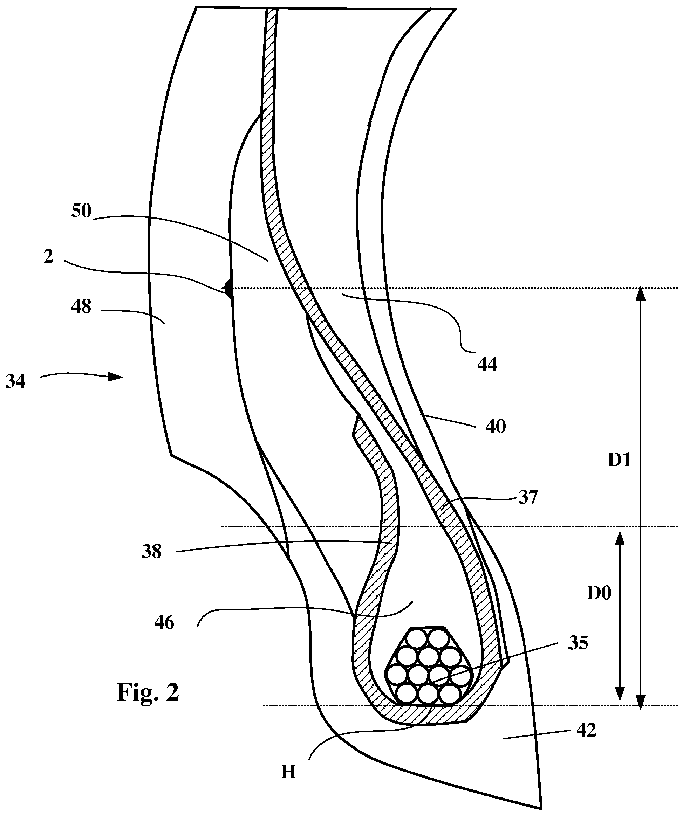

La figure 2 présente un bourrelet 34 et une partie d'un flanc de pneumatique, le flanc comprenant au moins une partie d'une gomme de flanc 48, apte à rouler à plat selon un premier mode de réalisation de l'invention. Dans l'architecture du pneumatique de la figure 2, l'extrémité radialement intérieure de la gomme de flanc 48 par rapport à l'axe de rotation est ancrée dans le bourrelet 34 du pneumatique.

Ce bourrelet 34 comporte en plus du bourrelet du pneumatique de la figure 1 une deuxième gomme de bourrage 50 disposée axialement extérieurement relativement à la première gomme de bourrage 46. Le retournement 38 de la nappe de carcasse 37 s'étend entre les deux gommes de bourrage 46 et 50.

La zone du pneumatique, délimitée par le bourrelet 34 et la partie du flanc, de la figure 2 comporte un organe électronique 2 disposé à une distance radiale D1 du point H. Le point H est un des points les plus proches de l'axe de rotation XX. La distance D1 doit être supérieure à D0 égale à 20 mm pour ne pas pénaliser la qualité de communication entre l'organe électronique et un lecteur externe. Cette distance est supérieure à la hauteur d'un crochet de jante usuel qui est de 17,5 mm. Cette distance D1 ne doit pas être trop élevée pour ne pas atteindre le milieu du flanc où les sollicitations mécaniques du flanc sont très élevées. Une distance de 30 à 40 mm est un bon compromis.

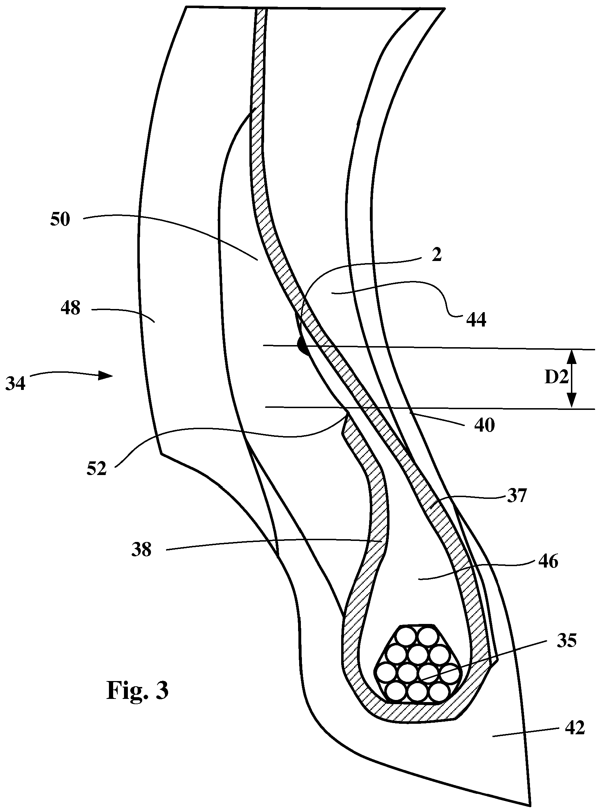

La figure 3 présente un bourrelet 34 et une partie d'un flanc de pneumatique apte à rouler à plat dont la structure est identique à celle du bourrelet et de la partie du flanc de la figure 2. L'extrémité du retournement 38 de la nappe de carcasse 37 est noté 52.

Ce bourrelet et cette partie de flanc de la figure 3 comporte un organe électronique 2 disposé radialement extérieurement à une distance radiale D2 de l'extrémité du retournement 52. Cette distance D2 est supérieure à 5 mm et de préférence supérieure à 10 mm pour écarter l'organe électronique de la singularité mécanique liée au bord du retournement de la nappe carcasse. Dans l'exemple présenté, l'organe électronique 2 est placé à l'interface entre la première gomme de bourrage 46 et la deuxième gomme de bourrage 52.

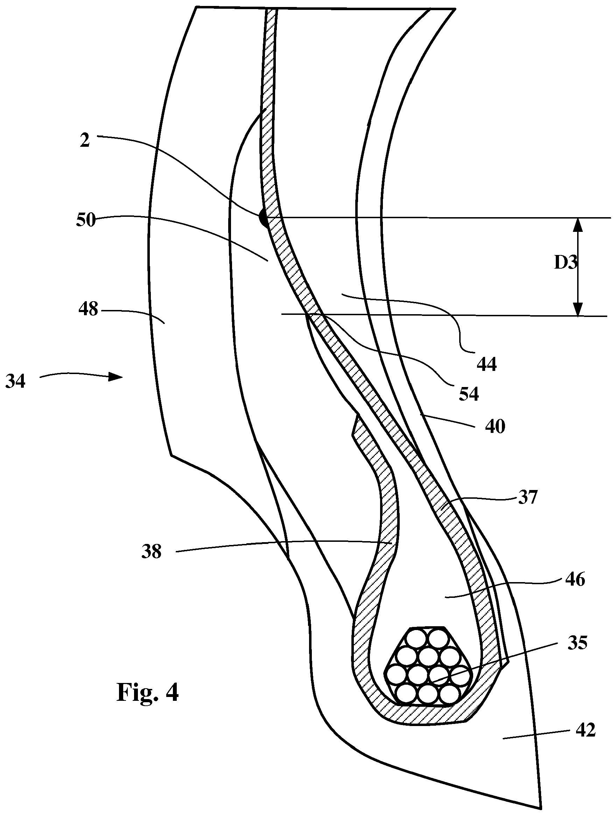

La figure 4 présente un bourrelet 34 et une partie d'un flanc de pneumatique apte à rouler à plat dont la structure est identique à celle du bourrelet et de la partie du flanc de la figure 2. L'extrémité radialement extérieure de la première gomme de bourrage 46 est notée 54.

La zone du pneumatique, délimitée par ce bourrelet et cette partie du flanc, de la figure 4 comporte un organe électronique 2 disposé radialement extérieurement à une distance radiale D3 de l'extrémité de la première gomme de bourrage 54. Cette distance D3 est supérieure à 5 mm et de préférence supérieure à 10 mm pour écarter l'organe électronique de la singularité mécanique liée au bord de la première gomme de bourrage 46. Dans l'exemple présenté, l'organe électronique 2 est placé à l'interface entre la nappe de carcasse 37 (plus précisément le calandrage de cette nappe de carcasse, il n'y a pas de contact direct entre l'organe électronique et les fils de renfort de la nappe de carcasse) et la première gomme de bourrage 46.

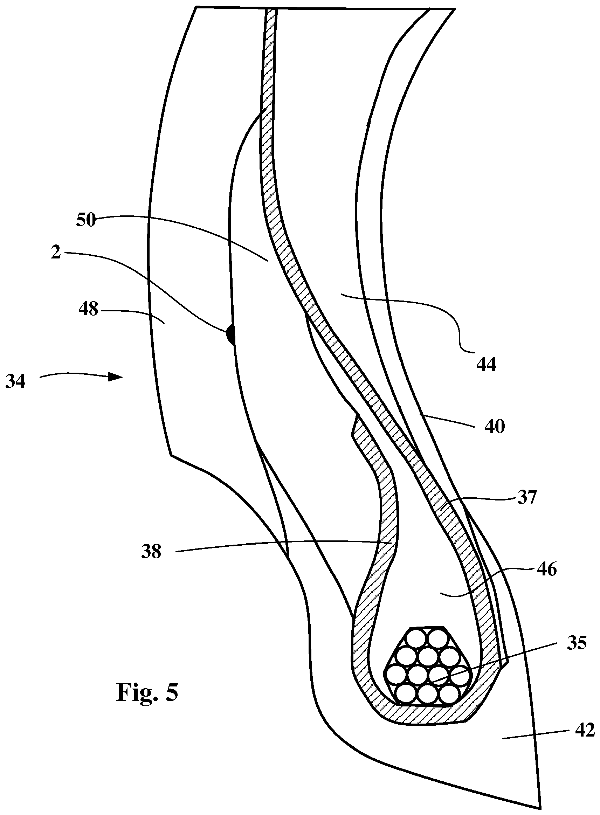

La figure 5 présente un bourrelet 34 et une partie d'un flanc de pneumatique apte à rouler à plat dont la structure est identique à celle du bourrelet et de la partie du flanc de la figure 2.

La zone du pneumatique, délimitée par ce bourrelet et cette partie du flanc, de la figure 5 comporte un organe électronique 2 disposé axialement intérieurement relativement à la deuxième gomme de bourrage 50. Dans l'exemple présenté, l'organe électronique 2 est placé à l'interface entre la gomme de flanc 48 et la deuxième gomme de bourrage 50. Cette position est intéressante car elle éloigne axialement l'organe électronique de l'insert de flanc 44 qui est la zone la plus chaude en cas de roulage à plat.

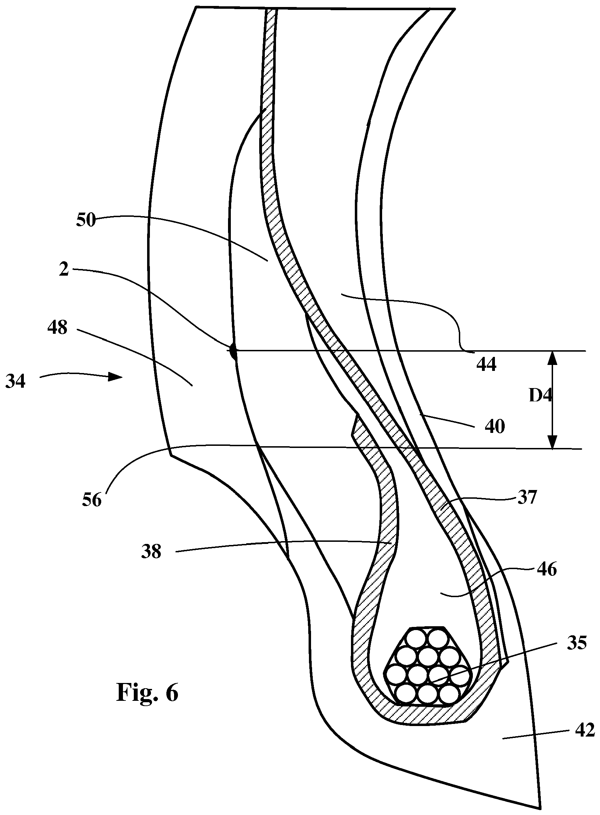

La figure 6 présente un bourrelet 34 et une partie d'un flanc de pneumatique apte à rouler à plat dont la structure est identique à celle du bourrelet et de la partie du flanc de la figure 2. L'extrémité radialement et axialement extérieure de la gomme protecteur 42 est notée 56.

La zone du pneumatique, délimitée par ce bourrelet et cette partie du flanc, de la figure 6 comporte un organe électronique 2 disposé radialement extérieurement à une distance radiale D4 de l'extrémité radialement et axialement extérieure de la gomme protecteur 42 notée 56. Cette distance D4 est supérieure à 5 mm et de préférence supérieure à 10 mm pour écarter l'organe électronique de la singularité mécanique liée au bord du protecteur 42 en raison de la différence de rigidité entre la gomme protecteur et la gomme de flanc 48. Dans l'exemple présenté, l'organe électronique 2 est placé à l'interface entre la deuxième gomme de bourrage 50 et la gomme de flanc 48.

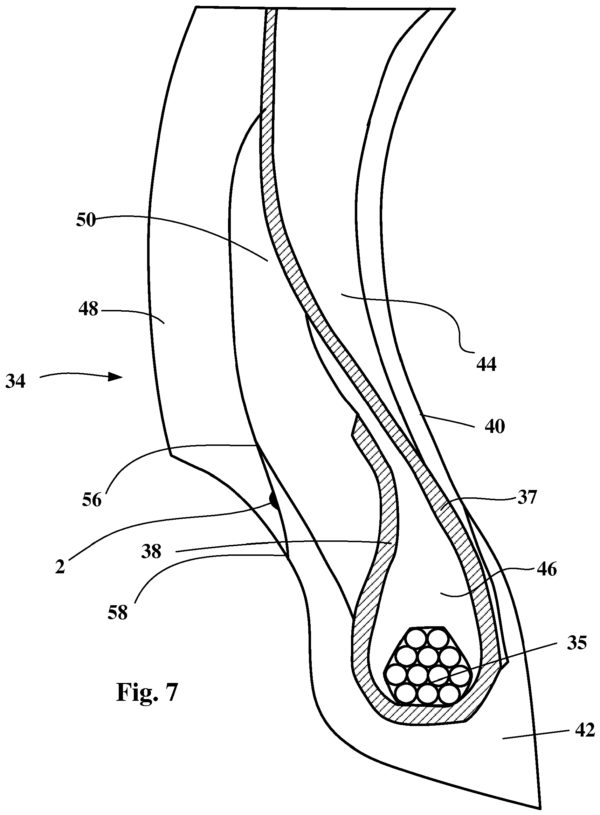

La figure 7 présente un bourrelet 34 et une partie du flanc de pneumatique apte à rouler à plat dont la structure est identique à celle du bourrelet et de la partie du flanc de la figure 2. L'extrémité radialement intérieure de la gomme de flanc 48 est notée 58 et l'extrémité axialement et radialement extérieure de la gomme protecteur 42 est notée 56.

Dans cet exemple, le flanc 33 comporte une gomme de flanc 48 et le bourrelet comporte une gomme protecteur 42. La gomme protecteur 42 s'étend axialement de part et d'autre de la tringle jusqu'à deux extrémités radialement extérieures. L'extrémité axialement extérieure 56 de la gomme protecteur disposée axialement intérieurement relativement à la gomme flanc 48 et s'étendant radialement au-delà de l'extrémité radialement intérieure 58 de la gomme flanc, l'organe électronique est disposé à l'interface entre la gomme de flanc 48 et la gomme protecteur 42.

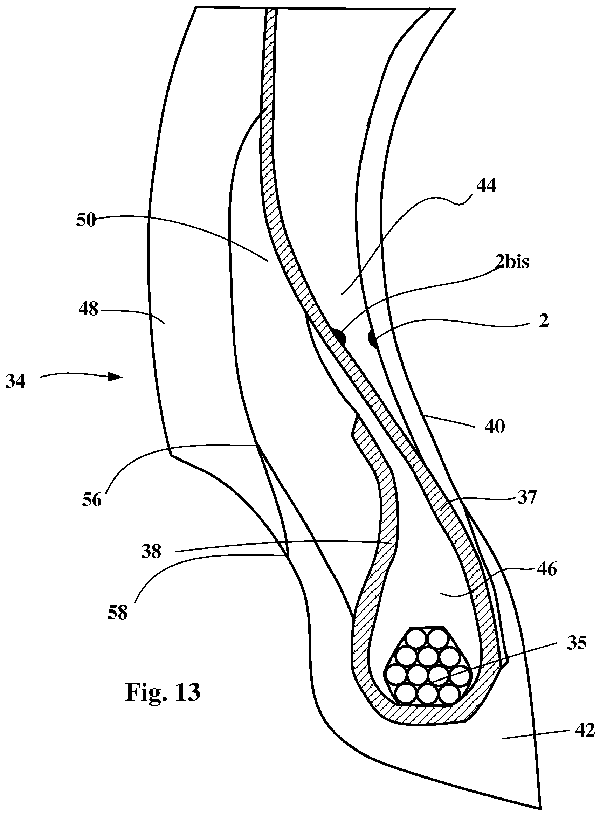

La figure 13 présente un bourrelet 34 et une partie du flanc de pneumatique apte à rouler à plat dont la structure est identique à celle du bourrelet et de la partie du flanc de la figure 2.

Dans cet exemple, deux positions d'organes électroniques ont été indiquées. Ces deux positions sont axialement intérieure et extérieure à l'insert de flanc 44. L'organe électronique 2 est disposé à l'interface entre l'insert de flanc 44 et la gomme intérieure 40. L'organe électronique 2bis est disposé à l'interface entre l'insert de flanc 44 et la nappe de carcasse 37 de l'armature de carcasse.

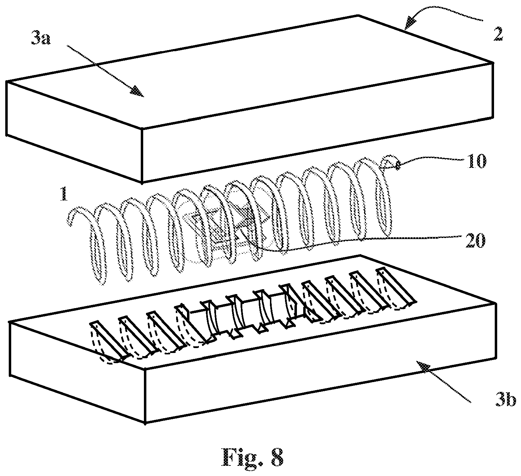

La figure 8 présente un éclaté d'un organe électronique 2. Cet organe 2 comprend un transpondeur radiofréquence 1 noyé entre deux couches 3a et 3b d'un mélange élastomère isolant électriquement non-vulcanisé. Un tel organe électronique est un produit semi-fini apte à être intégré dans la structure d'un pneumatique lors de la fabrication de celui-ci.

Le mélange élastomère d'enrobage contient 100 pce (parties pour 100 parties d'élastomère en masse) de polymère tel qu'EPDM (ethylene propylene diene monomer rubber), caoutchouc butyle, néoprène ou d'élastomère diénique tel que SBR (styrene-butadiene rubber), polybutadiène, caoutchouc naturel, ou polyisoprène.

Le mélange peut contenir des charges de type silice, noir de carbone, craie, kaolin :
- avec une charge de type silice à un taux maximum de 50 pce,
- avec une charge de type noir de carbone de grade ASTM supérieur à 700, à un taux inférieur à 50 pce ;
- avec une charge de type noir de carbone de grade inférieur ou égal à 500, a un taux maximum de 20 pce.
- il est possible d'ajouter ou de remplacer ces charges par de la craie ou du kaolin.

De tels taux et types de charges permettent de garantir une permittivité relative inférieure à 6.5, notamment à une fréquence de 915 MHz.

La rigidité à cuit du mélange d'enrobage est de préférence inférieure ou proche de celles des mélanges adjacents.

Dans un premier mode de réalisation, le transpondeur radiofréquence de l'organe électronique 2 est un transpondeur radiofréquence usuel, tel que décrit dans le document WO 2012/030321 A1. Ce transpondeur comprend une puce électronique fixée sur un support ou PCB (printed circuit board) et galvaniquement connectée à deux demi-antennes. Les antennes sont des ressorts hélicoïdaux à âme en fil d'acier.

Le transpondeur radiofréquence 1 de l'organe électronique 2 tel que présenté à la figure 8 correspond à un deuxième mode de réalisation de l'organe électronique 2 qui va être décrit maintenant.

Le transpondeur radiofréquence 1 selon l'invention comprend une puce électronique 22 et une antenne rayonnante 10 apte à communiquer avec un lecteur radiofréquence externe. Il comprend en plus une antenne primaire 24 connectée électriquement à la puce électronique 22 et couplée inductivement à l'antenne rayonnante 10. L'antenne rayonnante est une antenne dipôle constituée d'un ressort hélicoïdal monobrin définissant un premier axe longitudinal.

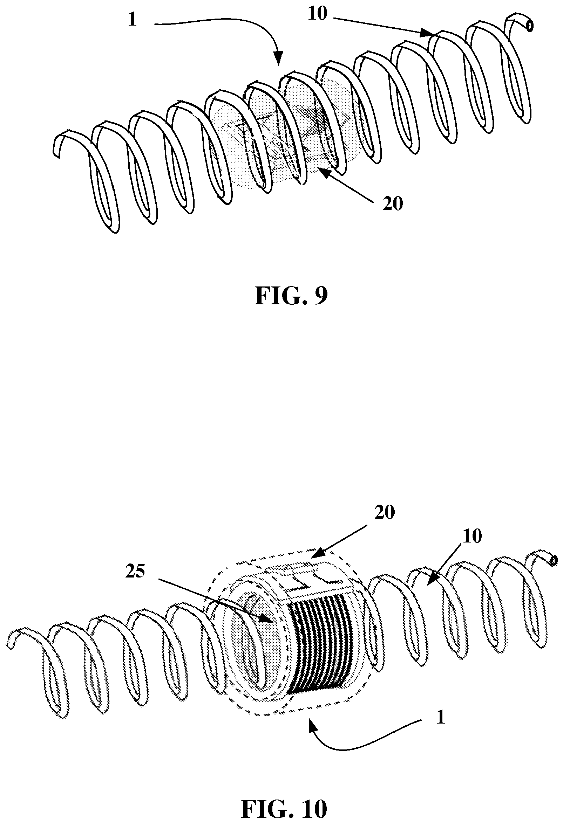

La figure 9 présente un transpondeur radiofréquence 1 dans une configuration où la partie électronique 20 est située à l'intérieur de l'antenne rayonnante 10. La forme géométrique de la partie électronique 10 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve dans la zone centrale de l'antenne rayonnante et sensiblement superposé au plan médian 19 de l'antenne rayonnante 10.

La figure 10 présente un transpondeur radiofréquence 1 dans une configuration où la partie électronique 20 se trouve à l'extérieur de l'antenne rayonnante 10. La forme géométrique de la partie électronique 20 présente une cavité cylindrique 25 dont le diamètre est supérieur ou égal au diamètre extérieur 15 de l'antenne rayonnante 10. L'enfilement de l'antenne rayonnante 10 dans la cavité cylindrique 25 de la partie électronique s'en trouve ainsi facilité. Le plan médian 21 de l'antenne primaire se trouve dans la zone centrale de l'antenne rayonnante et sensiblement dans le plan médian 19 de l'antenne rayonnante 10.

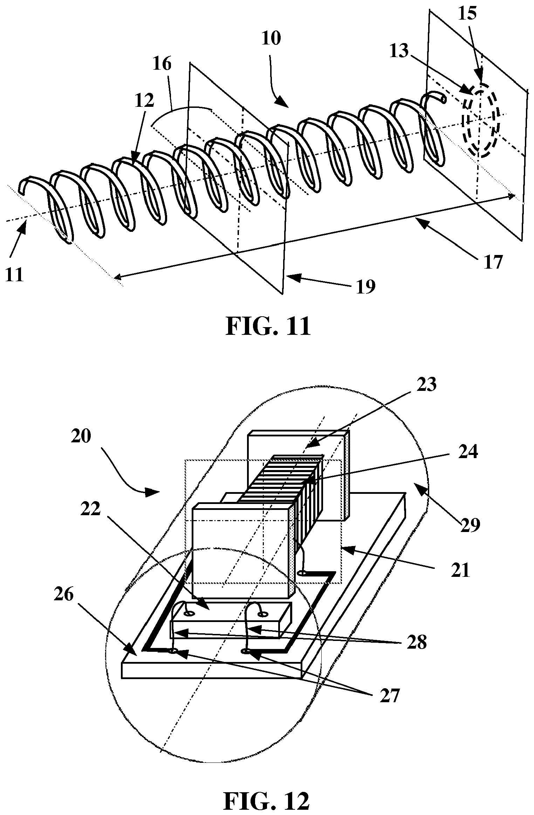

La figure 11 présente une antenne rayonnante 10 constituée d'un fil en acier 12 qui a été déformé plastiquement afin de former un ressort hélicoïdal présentant un axe de révolution 11. Ce fil d'acier est revêtu d'une couche de conduction en cuivre, aluminium, argent, zinc, or ou laiton recouverte si nécessaire d'une couche d'isolation chimique par exemple en laiton, zinc, nickel ou étain pour protéger le mélange caoutchouteux du matériau de la couche de conduction.

La conduction électromagnétique d'une telle antenne s'effectue principalement par un effet de peau, c'est-à-dire qu'elle est principalement assurée dans les couches extérieures de l'antenne. Cette épaisseur de peau est notamment fonction de la fonction de la fréquence de rayonnement et du matériau constitutif de la couche de conduction. À titre d'exemple, pour une fréquence UHF (par exemple 915 MHz), l'épaisseur de peau est de l'ordre de 2,1 µm pour l'argent, 2,2 µm pour le cuivre, 4,4 µm pour le laiton.

Le fil d'acier peut être revêtu de ces couches puis mis en forme ; alternativement il peut aussi être mis en forme puis revêtu.

Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en comptant le diamètre du fil. La longueur du ressort 17 correspond ici à la demi-longueur d'onde du signal de transmission du transpondeur radiofréquence 1 dans une masse caoutchouteuse. Ainsi on peut définir un plan médian 19 au ressort hélicoïdal perpendiculaire à l'axe de révolution 11 séparant l'antenne rayonnante en deux parties égales. Ce plan est au milieu de la zone centrale 16 de l'antenne rayonnante, cette zone centrale 16 correspond environ à 25 % de la longueur totale de l'antenne et de préférence 15 %.

La figure 12 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 de l'antenne primaire 24 est noyé dans une masse rigide 29 en résine époxy haute température isolante électriquement constituant la partie électronique 20 du transpondeur radiofréquence 1.

Ce transpondeur radio fréquence 1 a l'avantage d'être beaucoup plus résistant mécaniquement que les transpondeurs usuels et ainsi est particulièrement adapté à un usage sévère tel que rencontré avec des pneumatiques aptes à rouler à plat.

## Revendications

1. Pneumatique (30) adapté pour un roulage à plat, ledit pneumatique (30) comportant un sommet (32), deux flancs (33) et deux bourrelets (34), une armature de carcasse avec au moins une nappe de carcasse (37) ancrée dans chaque bourrelet (34) et un insert de flanc(44) disposé axialement intérieurement relativement à au moins ladite nappe de carcasse (37), **caractérisé en ce que** ledit pneumatique (30) est équipé d'un organe électronique (2) constitué du transpondeur radiofréquence (1) comprenant une puce électronique (22) et une antenne rayonnante (10) apte à communiquer avec un lecteur radiofréquence externe, **en ce que** le transpondeur radiofréquence (1) comprend en plus une antenne primaire (24) connectée électriquement à la puce électronique (22), dans lequel l'antenne primaire (24) est couplée inductivement à l'antenne rayonnante (10), et dans lequel l'antenne rayonnante (10) est une antenne dipôle constituée d'un ressort hélicoïdal monobrin définissant un premier axe longitudinal (11) **et en ce que**, chaque bourrelet (34) comportant une tringle (35) de révolution autour d'un axe de référence et H étant un des points de ladite tringle (35) les plus proches dudit axe de révolution, ledit organe électronique (2) est placé axialement dans une zone du pneumatique délimitée par au moins l'un des bourrelets (34) et l'un des flancs (33) et radialement extérieurement à une distance radiale supérieure à 20 mm dudit point H.

2. Pneumatique (30) selon la revendication 1, dans lequel ledit organe électronique (2) est placé radialement extérieurement à une distance radiale inférieure à 50 mm dudit point H.

3. Pneumatique (30) selon l'une quelconque des revendications 1 et 2, dans lequel ledit organe électronique (2) est placé radialement extérieurement à une distance radiale comprise entre 30 et 40 mm dudit point H.

4. Pneumatique (30) selon l'une quelconque des revendications précédentes, dans lequel, chaque bourrelet (34) comportant une tringle (35) de révolution autour d'un axe de référence, ladite armature de carcasse comprenant une nappe de carcasse (37) avec un retournement (38) autour de chacune des tringles (35) et ledit retournement (38) ayant une extrémité axialement extérieure (52), ledit organe électronique (2) est disposé radialement extérieurement à une distance supérieure à 5 mm et de préférence 10 mm de ladite extrémité axialement extérieure (52) de l'un desdits retournements (38).

5. Pneumatique (30) selon l'une quelconque des revendications 1 à 3, dans lequel, chaque bourrelet (34) comportant une tringle (35) de révolution autour d'un axe de référence et une gomme de bourrage (46) s'étendant radialement extérieurement relativement à ladite tringle (35), ladite armature de carcasse comprenant une nappe de carcasse (37) avec un retournement (38) autour de chacune des tringles (35) et ladite gomme de bourrage (46) s'étendant radialement au-delà de l'extrémité axialement extérieure (52) dudit retournement (38) ledit organe électronique (2) est disposé axialement extérieurement relativement à l'armature de carcasse et radialement à une distance radiale supérieure à 5 mm et de préférence 10 mm de l'extrémité radialement extérieure (54) de ladite gomme de bourrage (46).

6. Pneumatique (30) selon l'une quelconque des revendications 1 à 3, dans lequel, chaque bourrelet (34) comportant une tringle (35) de révolution autour d'un axe de référence, une première (46) et une deuxième (50) gommes de bourrage s'étendant radialement extérieurement relativement à ladite tringle (35) ladite deuxième gomme de bourrage (50) étant disposée axialement extérieurement relativement à la première (46), ladite armature de carcasse comprenant une nappe de carcasse (37) avec un retournement (38) autour de chacune des tringles (35) et s'étendant radialement entre lesdites première (46) et deuxième (50) gommes de bourrage, l'organe électronique (2) est disposé axialement extérieurement relativement à ladite deuxième gomme de bourrage (50).

7. Pneumatique (30) selon la revendication 6, dans lequel, le flanc (33) comportant une gomme flanc (48) disposée au moins en partie axialement extérieurement relativement à la deuxième gomme de bourrage (50), ledit organe électronique (2) est disposé à l'interface entre ladite gomme flanc (48) et ladite deuxième gomme de bourrage (50).

8. Pneumatique (30) selon la revendication 6, dans lequel, le bourrelet (34) comportant une gomme protecteur (42) apte à venir en contact avec la surface d'une jante disposée radialement intérieurement relativement à ladite tringle (35) et s'étendant de part et d'autre de ladite tringle (35) jusqu'à deux extrémités radialement extérieure, l'extrémité axialement extérieure (56) de ladite gomme protecteur (42) s'étendant radialement au-delà de l'extrémité radialement intérieure de ladite deuxième gomme de bourrage (50), l'organe électronique (2) est disposé entre ledit protecteur (42) et ladite gomme de bourrage (50).

9. Pneumatique (30) selon l'une quelconque des revendications 1 à 3, dans lequel, le flanc(33) comportant une gomme flanc (48) et le bourrelet (34) comportant une gomme protecteur (42) apte à venir en contact avec la surface d'une jante disposée radialement intérieurement relativement à ladite tringle (35) et s'étendant de part et d'autre de celle-ci jusqu'à deux extrémités radialement extérieures, l'extrémité axialement extérieure (56) de ladite gomme protecteur (42) disposée axialement intérieurement relativement à la gomme flanc (48) et s'étendant radialement au-delà de l'extrémité radialement intérieure (58) de ladite gomme flanc (48), ledit organe électronique (2) est disposé entre ladite gomme flanc (48) et ladite gomme protecteur (42).

10. Pneumatique (30) selon l'une quelconque des revendications 1 à 3, dans lequel l'organe électronique (2) est disposé à l'interface entre ledit insert de flanc (44) et un mélange caoutchouteux adjacent.

11. Pneumatique (30) selon l'une quelconque des revendications précédentes, dans lequel, l'armature de carcasse comprenant au moins une nappe de carcasse (37), l'insert de flanc (44) est disposé axialement intérieurement relativement à au moins une nappe de carcasse (37).

12. Pneumatique selon l'une quelconque des revendications précédentes, dans lequel l'insert de flanc (44) a une épaisseur maximale comprise entre 6 et 16 mm.

13. Pneumatique (30) selon l'une quelconque des revendications 1 à 12, dans lequel l'organe électronique (2) est constitué du transpondeur radiofréquence (1) encapsulé dans au moins une masse de gomme d'enrobage (3a,3b) isolante électriquement.

14. Pneumatique (30) selon la revendication 13, dans lequel le module en extension de la masse de gomme d'enrobage (3a, 3b) est inférieur ou égal au module en extension des mélanges caoutchouteux adjacents.

15. Pneumatique (30) selon l'une des revendications 13 et 14, dans lequel la constante diélectrique relative de la masse de gomme d'enrobage (3a,3b) est inférieure à la constante diélectrique relative des mélanges caoutchouteux adjacents.

16. Pneumatique (30)selon l'une des revendications précédentes, dans lequel l'antenne primaire (24) est une bobine ayant au moins une spire définissant un deuxième axe longitudinal (23) qui est circonscrite dans un cylindre dont l'axe de révolution est parallèle au deuxième axe longitudinal (23) et dont le diamètre est compris entre le tiers et trois fois, de préférence entre la moitié et deux fois, le diamètre moyen du ressort hélicoïdal de l'antenne rayonnante (10).

17. Pneumatique (30) selon la revendication 16, dans lequel, l'antenne rayonnante (10) ayant une zone centrale entre deux zones latérales et l'antenne primaire (24) ayant un plan médian perpendiculaire au deuxième axe longitudinal (23), lesdits premier (11) et deuxième (23) axes longitudinaux sont parallèles entre eux et ledit plan médian de l'antenne primaire (24) est disposé dans la zone centrale de l'antenne rayonnante (10).

18. Pneumatique (30) selon l'une quelconque des revendications précédentes, dans lequel l'antenne primaire (34) est disposée à l'intérieur du ressort hélicoïdal monobrin de l'antenne rayonnante (10).

## Patentansprüche

1. Reifen (30) mit Notlaufeigenschaft, wobei der Reifen (30) einen Scheitel (32), zwei Flanken (33) und zwei Wülste (34), eine Karkassenbewehrung mit zumindest einer in jeder Wulst (34) verankerten Karkassenlage (37) und einen Flankeneinsatz (44), der relativ zumindest zur Karkassenlage (37) axial innen angeordnet ist, aufweist, **dadurch gekennzeichnet, dass** der Reifen (30) mit einem elektronischen Organ (2) ausgestattet ist, das aus einem Radiofrequenztransponder (1) gebildet ist, der einen elektronischen Chip (22) und eine strahlende Antenne (10) umfasst, die in der Lage ist, mit einem externen Radiofrequenzleser zu kommunizieren, dass der Radiofrequenztransponder (1) ferner eine Primärantenne (24) umfasst, die mit dem elektronischen Chip (22) elektrisch verbunden ist, wobei die Primärantenne (24) mit der strahlenden Antenne (10) induktiv gekoppelt ist, und wobei die strahlende Antenne (10) eine Dipolantenne ist, die aus einer einsträngigen Schraubenfeder gebildet ist, die eine erste Längsachse (11) definiert, und dass jede Wulst (34) einen Wulstkern (35) zur Drehung um eine Bezugsachse aufweist und H einer der Punkte des Wulstkerns (35) ist, die der Drehachse am nächsten liegen, wobei das elektronische Organ (2) axial in einem Bereich des Reifens, der durch zumindest eine der Wülste (34) und eine der Flanken (33) begrenzt ist, und radial außen in einem radialen Abstand von mehr als 20 mm zum Punkt H angeordnet ist.

2. Reifen (30) nach Anspruch 1, wobei das elektronische Organ (2) radial außen in einem radialen Abstand von weniger als 50 mm zum Punkt H angeordnet ist.

3. Reifen (30) nach einem der Ansprüche 1 und 2, wobei das elektronische Organ (2) radial außen in einem radialen Abstand zwischen 30 und 40 mm zum Punkt H angeordnet ist.

4. Reifen (30) nach einem der vorangehenden Ansprüche, wobei jede Wulst (34) einen Wulstkern (35) zur Drehung um eine Bezugsachse aufweist, wobei die Karkassenbewehrung eine Karkassenlage (37) mit einem Umschlag (38) um jeden der Wulstkerne (35) aufweist und wobei der Umschlag (38) ein axial äußeres Ende (52) aufweist, wobei das elektronische Organ (2) radial außen in einem Abstand von mehr als 5 mm und vorzugsweise 10 mm zum axial äußeren Ende (52) des einen der Umschläge (38) angeordnet ist.

5. Reifen (30) nach einem der Ansprüche 1 bis 3, wobei jede Wulst (34) einen Wulstkern (35) zur Drehung um eine Bezugsachse und einen Füllgummi (46) aufweist, der sich radial außen relativ zum Wulstkern (35) erstreckt, wobei die Karkassenbewehrung eine Karkassenlage (37) mit einem Umschlag (38) um jeden der Wulstkerne (35) aufweist und wobei sich der Füllgummi (46) radial über das axial äußere Ende (52) des Umschlags (38) hinaus erstreckt, wobei das elektronische Organ (2) axial außen relativ zur Karkassenbewehrung und radial in einem radialen Abstand von mehr als 5 mm und vorzugsweise 10 mm zum radial äußeren Ende (54) des Füllgummis (46) angeordnet ist.

6. Reifen (30) nach einem der Ansprüche 1 bis 3, wobei jede Wulst (34) einen Wulstkern (35) zur Drehung um eine Bezugsachse sowie einen ersten (46) und einen zweiten Füllgummi (50) aufweist, die sich radial außen relativ zum Wulstkern (35) erstrecken, wobei der zweite Füllgummi (50) axial außen relativ zum ersten (46) angeordnet ist, wobei die Karkassenbewehrung eine Karkassenlage (37) mit einem Umschlag (38) um jeden der Wulstkerne (35) aufweist und sich radial zwischen dem ersten (46) und dem zweiten Füllgummi (50) erstreckt, wobei das elektronische Organ (2) axial außen relativ zum zweiten Füllgummi (50) angeordnet ist.

7. Reifen (30) nach Anspruch 6, wobei die Flanke (33) einen Flankengummi (48) aufweist, der zumindest teilweise axial außen relativ zum zweiten Füllgummi (50) angeordnet ist, wobei das elektronische Organ (2) an der Schnittstelle zwischen dem Flankengummi (48) und dem zweiten Füllgummi (50) angeordnet ist.

8. Reifen (30) nach Anspruch 6, wobei die Wulst (34) einen Schutzgummi (42) aufweist, der in der Lage ist, mit der Oberfläche einer Felge in Kontakt zu kommen, die radial innen relativ zum Wulstkern (35) angeordnet ist und sich zu beiden Seiten des Wulstkerns (35) bis zu zwei radial äußeren Enden erstreckt, wobei sich das axial äußere Ende (56) des Schutzgummis (42) radial über das radial innere Ende des zweiten Füllgummis (50) hinaus erstreckt, wobei das elektronische Organ (2) zwischen dem Schutzgummi (42) und dem Füllgummi (50) angeordnet ist.

9. Reifen (30) nach einem der Ansprüche 1 bis 3, wobei die Flanke (33) einen Flankengummi (48) aufweist und die Wulst (34) einen Schutzgummi (42) aufweist, der dazu in der Lage ist, mit der Oberfläche einer Felge in Kontakt zu kommen, die radial innen relativ zum Wulstkern (35) angeordnet ist und sich zu beiden Seiten desselben bis zu zwei radial äußeren Enden erstreckt, wobei das axial äußere Ende (56) des Schutzgummis (42) axial innen relativ zum Flankengummi (48) angeordnet ist und sich radial über das radial innere Ende (58) des Flankengummis (48) hinaus erstreckt, wobei das elektronische Organ (2) zwischen dem Flankengummi (48) und dem Schutzgummi (42) angeordnet ist.

10. Reifen (30) nach einem der Ansprüche 1 bis 3, wobei das elektronische Organ (2) an der Schnittstelle zwischen dem Flankeneinsatz (44) und einer angrenzenden Kautschukmischung angeordnet ist.

11. Reifen (30) nach einem der vorangehenden Ansprüche, wobei die Karkassenbewehrung zumindest eine Karkassenlage (37) umfasst, wobei der Flankeneinsatz (44) axial innen relativ zu zumindest einer Karkassenlage (37) angeordnet ist.

12. Reifen nach einem der vorangehenden Ansprüche, wobei der Flankeneinsatz (44) eine maximale Dicke zwischen 6 und 16 mm aufweist.

13. Reifen (30) nach einem der Ansprüche 1 bis 12, wobei das elektronische Organ (2) aus dem Radiofrequenztransponder (1) gebildet ist, der in zumindest eine elektrisch isolierende Gummivergussmasse (3a, 3b) eingekapselt ist.

14. Reifen (30) nach Anspruch 13, wobei der Dehnungsmodul der Gummivergussmasse (3a, 3b) kleiner als oder so groß wie der Dehnungsmodul der angrenzenden Kautschukmischungen ist.

15. Reifen (30) nach einem der Ansprüche 13 und 14, wobei die relative Dielektrizitätskonstante der Gummivergussmasse (3a, 3b) kleiner als die relative Dielektrizitätskonstante der angrenzenden Kautschukmischungen ist.

16. Reifen (30) nach einem der vorangehenden Ansprüche, wobei die Primärantenne (24) eine Spule mit zumindest einer Windung ist, die eine zweite Längsachse (23) definiert, die in einen Zylinder eingefasst ist, dessen Drehachse parallel zur zweiten Längsachse (23) verläuft und dessen Durchmesser zwischen einem Drittel und dem Dreifachen, vorzugsweise zwischen der Hälfte und dem Doppelten, des mittleren Durchmessers der Schraubenfeder der strahlenden Antenne (10) liegt.

17. Reifen (30) nach Anspruch 16, wobei die strahlende Antenne (10) einen zentralen Bereich zwischen zwei Seitenbereichen aufweist und die Primärantenne (24) eine Mittelebene senkrecht zur zweiten Längsachse (23) aufweist, wobei die erste (11) und die zweite Längsachse (23) parallel zueinander sind und die Mittelebene der Primärantenne (24) im zentralen Bereich der strahlenden Antenne (10) angeordnet ist.

18. Reifen (30) nach einem der vorangehenden Ansprüche, wobei die Primärantenne (34) innerhalb der einsträngigen Schraubenfeder der strahlenden Antenne (10) angeordnet ist.

## Claims

1. Tyre (30) suitable for running flat, said tyre (30) comprising a crown (32), two sidewalls (33) and two beads (34), a carcass reinforcement with at least one carcass ply (37) anchored in each bead (34) and a sidewall insert (44) placed axially internally relative to at least said carcass ply (37), **characterized in that** said tyre (30) is equipped with an electronic device (2) consists of the radiofrequency transponder (1) comprising an electronic chip (22) and a radiating antenna (10) able to communicate with an external radiofrequency reader, **in that** the radiofrequency transponder (1) in addition comprises a primary antenna (24) electrically connected to the electronic chip (22), wherein the primary antenna (24) is inductively coupled to the radiating antenna (10), and wherein the radiating antenna (10) is a dipole antenna consisting of a single-strand helical spring defining a first longitudinal axis (11) **and in that,** each bead (34)comprising a bead wire (35) of revolution about a reference axis and H being one of the points of said bead wire (35) closest said axis of revolution, said electronic device (2) is placed axially in a zone of the tyre bounded by at least one of the beads (34) and one of the sidewalls (33) and radially externally at a radial distance larger than 20 mm from said point H.

2. Tyre (30)according to Claim 1, wherein said electronic device (2) is placed radially externally at a radial distance smaller than 50 mm from said point H.

3. Tyre (30) according to either one of Claims 1 and 2, wherein said electronic device (2) is placed radially externally at a radial distance comprised between 30 and 40 mm from said point H.

4. Tyre (30) according to any one of the preceding claims, wherein, each bead (34) comprising a bead wire (33) of revolution about a reference axis, said carcass reinforcement comprising a carcass ply (37) with a turn-up (38) about each of the bead wires (35) and said turn-up (38) having an axially external end (52), said electronic device (2) is placed radially externally at a distance larger than 5 mm and preferably 10 mm from said axially external end (52) of one of said turn-ups (38).

5. Tyre (30) according to any one of the Claims 1 to 3, wherein, each bead (34) comprising a bead wire (33) of revolution about a reference axis and a filling rubber (46) extending radially externally relative to said bead wire (35), said carcass reinforcement comprising a carcass ply (37) with a turn-up (38) about each of the bead wires (35) and said filling rubber (46) extending radially beyond the axially external end (52) of said turn-up,(38) said electronic device (2) is placed axially externally relative to the carcass reinforcement and radially at a radial distance larger than 5 mm and preferably 10 mm from the radially external end (54) of said filling rubber (46).

6. Tyre (30) according to any one of Claims 1 to 3, wherein, each bead (34) comprising a bead wire (35)of revolution about a reference axis, a first (46) and a second (50) filling rubber extending radially externally relative to said bead wire (35), said second filling rubber (50) being placed axially externally relative to the first (46), said carcass reinforcement comprising a carcass ply (37) with a turn-up (38) about each of the bead wires (35) and extending radially between said first (46) and second (50) filling rubbers, the electronic device (2) is placed axially externally relative to said second filling rubber (50).

7. Tyre (30) according to Claim 6, wherein, the sidewall (33) comprising a sidewall rubber (48) placed at least partially axially externally relative to the second filling rubber (50), said electronic device (2) is placed at the interface between said sidewall rubber (48) and said second filling rubber (50).

8. Tyre (30) according to Claim 6, wherein, the bead (34) comprising a protector rubber (42) able to make contact with the surface of a rim placed radially internally relative to said bead wire (35) and extending on either side of said bead wire (35) to two radially external ends, the axially external end (56) of said protector rubber (42) extending radially beyond the radially internal end of said second filling rubber (50), the electronic device (2) is placed between said protector (42) and said filling rubber (50).

9. Tyre (30) according to any one of Claims 1 to 3, wherein, the sidewall (33) comprising a sidewall rubber (48) and the bead (34) comprising a protector rubber (42) able to make contact with the surface of a rim placed radially internally relative to said bead wire (35)and extending on either side thereof to two radially external ends, the axially external end (56) of said protector rubber (42) placed axially internally relative to the sidewall rubber (48) and extending radially beyond the radially internal end (58) of said sidewall rubber (48), said electronic device (2) is placed between said sidewall rubber (48) and said protector rubber (42).

10. Tyre (30) according to any one of Claims 1 to 3, wherein the electronic device (2) is placed at the interface between said sidewall insert (44) and an adjacent rubber blend.

11. Tyre (30) according to any one of the preceding claims, wherein, the carcass reinforcement comprising at least one carcass ply (37), the sidewall insert (44) is placed axially internally relative to at least one carcass ply (37).

12. Tyre (30) according to any one of the preceding claims, wherein the sidewall insert (44) has a maximum thickness comprised between 6 and 16 mm.

13. Tyre according to any one of Claims 1 to 12, wherein the electronic device (2) consists of the radiofrequency transponder (1) encapsulated in at least one electrically insulating encapsulating rubber mass (3a, 3b).

14. Tyre (30) according to Claim 13, wherein the elastic modulus of the encapsulating rubber mass (3a, 3b) is lower than or equal to the elastic modulus of the adjacent rubber blends.

15. Tyre (30) according to one of Claims 13 and 14, wherein the relative dielectric constant of the encapsulating rubber mass (3a, 3b) is lower than the relative dielectric constant of the adjacent rubber blends.

16. Tyre (30) according according to any one of the preceding claims, wherein the primary antenna (24) is a coil having at least one turn defining a second longitudinal axis (23) that is circumscribed in a cylinder the axis of revolution of which is parallel to the second longitudinal axis (23) and the diameter of which is comprised between one third and three times, and preferably between half and two times, the average diameter of the helical spring of the radiating antenna (10).

17. Tyre (30) according to Claim 16, wherein, the radiating antenna (10) having a central zone between two lateral zones and the primary antenna (24) having a median plane perpendicular to the second longitudinal axis (23), said first (11) and second (23) longitudinal axes are parallel to each other and said median plane of the primary antenna (24) is placed in the central zone of the radiating antenna (10).

18. Tyre (30) according to any one of the preceding claims, wherein the primary antenna (34) is placed in the interior of the single-strand helical spring of the radiating antenna (10).
